# EUROPEAN PATENT SPECIFICATION

(11) **EP 2 474 788 B1**
(45) Date of publication and mention of the grant of the patent: **17.05.2017**
(21) Application number: 11192964.2
(22) Date of filing: 12.12.2011
(51) Int. Cl.: F24D 3/14

(54) **Grid element, moulded form part, grid, and method of mounting a heating and/or cooling pipe to a concrete building structure**
Gitterelement, Formteil, Gitter und Verfahren zur Montage eines Heiz- und/oder Kühlrohrs an eine Gebäudestruktur aus Beton
Élément de grille, pièce formée par moulage, grille et procédé pour monter un tuyau de chauffage et/ou de refroidissement sur une structure de bâtiment en béton

(30) Priority: 10.01.2011 NL 1038504
(43) Date of publication of application: 11.07.2012
(73) Proprietor: Wavin B.V., 8011 CW Zwolle (NL)
(72) Inventor: Brookman, Geert, 9301 BP Roden (NL)
(74) Representative: Hoffmann Eitle

(56) References cited:
- WO-A1-2008/140303
- DE-A1- 19 847 262
- DE-U1-202005 015 163
- FR-A1- 2 790 819

## Description

### Technical Field

The present invention is directed to grid elements for securing heating and/or cooling pipes in a concrete structure according to the preamble of claim 1. The present invention is further directed to a moulded form part comprising a series of such grid elements, to a grid assembled from such grid elements or form parts, and to a method of mounting a heating and/or cooling pipe to a concrete building structure according to the preamble of claim 21.

A grid element of this kind is used for fixing pipes used for heating or cooling reinforced-concrete building structures, e.g. as part of a ceiling heating or cooling. A fluid, which has a predetermined temperature, flows through these pipes in order to adjust or maintain the temperature of the reinforced-concrete building structure. In this way, the reinforced-concrete building structures of a building can be used for dampening the temperature changes within the building during the course of the day. The grid elements are used for keeping these pipes in the correct position from the ceiling and for keeping the correct distance between the bended pipe lengths.

At the same time, building structures made from reinforced concrete also comprise reinforcing elements, e.g. in the form of grid mats made from iron or the like metal, in order to enhance their stability. Grids of the aforementioned kind are used as spacers for spacing such a reinforcement mat from a wooden casing when forming the building structure, such as a ceiling or a floor. For example, when forming a ceiling from reinforced concrete, a spacer is arranged on the wooden casing, and the reinforcement mat is in turn placed on the spacer so that it has a predetermined distance from the wooden casing and, therefore, from the surface of the resultant ceiling. The concrete is then poured so as to form the ceiling. The present grid element can, apart from being used for securing the heating and/or cooling pipes, also be part of such a spacer used for keeping the distance between the reinforcing mats and the wooden casings.

### Prior Art

EP 1 719 852 A2 (Uponor) describes a related grid element made from plastic material. The grid element comprises several struts crossing each other. Pipe accommodation grooves are formed at the crosspoints of the struts. Further pipe accommodation grooves are formed alongside some of the struts. These grooves form an angle of 90° with the respective strut.

Several identical grid elements can be placed adjacent to each other and interconnected via e.g. a dovetail connection, forming a spacer. When this spacer is arranged on a wooden casing, only some of the struts touch the casing, whereas others are arranged at a distance there from. The reinforcement mat comes to rest on support lines on the side of the spacer which is opposite the casing.

DE-A1-198 47 262 discloses a grid element according to the preamble of claim 1. Also from FR-A1-2 790 819, a mounting grid is known.

### Disclosure of the invention

The object underlying the present invention is to provide a grid element of the aforementioned kind, which allows a convenient fixing of the heating and/or cooling pipes. The invention also aims at providing a moulded form part comprising a series of such grid elements, a grid assembled from such grid elements or form parts, and a method of mounting a heating and/or cooling pipe to a concrete building structure.

This object is, on the one hand, solved by means of the grid element according to claim 1.

The grid element is constituted for securing a heating and/or cooling pipe in a concrete building structure, and it comprises at least two securing members defining a gap for resiliently accommodating the pipe. The grid element is so arranged and constructed that the securing members are resiliently moved apart when the pipe is pressed into the gap.

The resilient behaviour of the securing members facilitates placement of the pipe within the gap defined by the securing members. The pipe can be more quickly secured to the grid elements which shortens the overall time and effort required for installing the pipe.

The grid element has several struts which intersect or cross each other, and the securing members and/or the positioning means are spaced from intersection or cross points between the individual struts. In other words, the securing members and/or the positioning means extend in or through a single strut. They do not extend through a crosspoints between two struts or at a meeting point of two struts. Manufacture of the grid is facilitated thereby, and any weakening of the crossing points or meeting points can be prevented.

Preferred optional features are recited in the dependent claims.

First of all, preferably, the grid element further comprises means for positioning the pipe. The pipe is then secured by the securing members, while it is positioned by the positioning means.

In the grid element, the positioning means are preferably provided in the form of at least one groove formed in at least one of the struts. The positioning means could, however, have any shape and form as long as they position the pipe. Apart from a groove, they could be a ridge or a rib or other projections as well.

In case the positioning means are provided in the form of a groove, the securing members are preferably provided in the form of legs on both sides of the groove.

In another preferred embodiment, a main direction of extension of the pipe positioning means includes an angle with the main direction of extension of the strut in which it is formed, which angle is different from 90°. Preferably, the angle is between 25 and 65°, more preferably around 45 or 60°.

The securing members and/or the positioning means are preferably so arranged and constructed that, if the pipe is secured to the grid element, the main direction of extension of the pipe includes an angle with the strut in which the securing members and/or the positioning means are formed which is different from 90°. Preferably, the angle is between 25 and 65°, more preferably around 45 or 60°.

This orientation of the securing members and/or the positioning means within the strut greatly facilitates insertion of the pipe lengths into the groove, as significantly less force is necessary if compared with a pipe accommodating groove which extends at a right angle with the strut in which it is formed. In particular in case the grid elements are all hexagonal, the angle formed by the securing members and/or the positioning means and the respective strut may preferably be 60°.

Regarding the shape of the grid element, the grid element preferably has a polygonal shape, e.g. a hexagonal shape. They could, however, also have a different polygonal shape, i.e. square, rhombic or octagonal, or even a circular shape.

The grid element preferably also comprises at least one through hole for accommodating a screw, a nail or the like, wherein the through hole is preferably arranged at a corner of the polygonal grid element. By means of these screws, nails or the like, the grid elements can be fastened to the casing. In the case of polygonal grid elements the through holes could suitably be arranged at the corners of the grid elements which are free from securing members and positioning means.

The securing members are preferably arranged to engage, during use, the pipe at opposite sides, at locations that are spaced apart in the longitudinal direction of the pipe. The securing members are preferably also located adjacent to the positioning means.

In a preferred embodiment of the grid element, side faces of the struts are tapered, and the taper angle is at least 5° and preferably around 7° with respect to a direction perpendicular to a base plane of the grid element. The grid elements can then be moulded in a simple open / close mould without complex undercuts.

Upper sides of the struts may together form a planar bearing surface. In other words, the upper sides of all the struts are formed planar so as to constitute continuous support lines for supporting the reinforcement mat. These support lines form a planar structure so that the reinforcement mat (not shown) does not get caught by protruding elements when it is placed onto the grid elements.

Bottom sides of the struts may be formed with protruding nobs. These bottom sides of the struts come to rest on the wooden casing. The nobs set a distance between the struts and the casing when the grid elements are brought into contact with the casing.

The grid element may further comprise at least one connecting strut for attachment to an adjacent grid element, wherein the connecting strut preferably also includes pipe positioning means and securing members. The connecting struts could also include securing members and/or positioning means. The securing members formed in the connecting struts could e.g. be suitable for accommodating a pipe bend.

The above object is also solved by means of a moulded form part according to claim 16, comprising a series of the grid elements described above.

The above object is also solved by means of a grid according to claim 17, assembled from grid elements or from form parts as described above. The grid is preferably constituted as a spacer for maintaining a predetermined distance between a reinforcement mat and a casing in a reinforced-concrete building structure such as a ceiling or a floor. The grid elements or the form parts, respectively, may be attached to each other by means of connecting struts, and the connecting struts of adjacent grid elements may be arranged and constructed so as to form further grid elements.

In the case of hexagonal grid elements, the connecting struts thereof suitably extend from two opposite corners of each hexagon. If the grid elements, or the form parts including several of the grid elements, are connected with each other by means of the connecting struts, additional hexagonal shapes are formed in between the grid elements or form parts by means of the connecting struts. By connecting several grid elements or form parts via their respective connecting struts, a complete grid is formed which is constituted by hexagons all having the same size.

By connecting a plurality of identical grid elements or form parts in this manner, the grid can be custom tailored to a relatively large degree, while it can still be formed and placed in a cost effective manner.

Finally, the above object is also solved by a method of mounting a heating and/or cooling pipe to a concrete building structure according to claim 20. The method comprises the following steps: providing a grid element comprising at least two securing members defining a gap for resiliently accommodating the pipe, and pressing the pipe into the gap. The securing members are resiliently moved apart when the pipe is pressed into the gap. The grid element has several struts which intersect or cross each other, and wherein the securing members and/or the positioning means are spaced from intersection or cross points between the individual struts.

### Brief description of the drawings

In the attached drawings,
- Figure 1a: shows a schematic perspective view of a grid according to a first preferred embodiment of the present invention;
- Figure 1b: shows a single grid element;
- Figure 1c: shows an assembly which is formed by arranging three of the grids shown in Figure 1a in series;
- Figure 2a: shows a schematic top view of a part of the grid of the first embodiment;
- Figures 2b and 2c: show rhombic grid elements (Figure 2b) and octagonal grid elements 2 (Figure 2c);
- Figure 2d: shows a prior art arrangement for comparison purposes;
- Figure 3a: is a schematic, enlarged view of a detail "A" marked in Figure 2a;
- Figure 3b: is a schematic, enlarged view of a detail "B" marked in Figure 2d;
- Figures 4 and 5: show more detailed views of how a pipe length extends through a pipe accommodating groove formed in a strut of a grid according to the present invention;
- Figure 6a: schematically shows two form parts each including five hexagonal grid elements arranged in series;
- Figure 6b: shows the connection between two form parts;
- Figure 7: shows an example of a snap joint which could be used for connecting two form parts together;
- Figure 8: is a schematic view of an alternative arrangement of pipe accommodating grooves;
- Figure 9: is a sectional view of a strut of the grid element;
- Figure 10: is an enlarged view showing securing members and positioning means of the grid element; and
- Figure 11: is a schematic view of a grid element according to an alternative embodiment of the present invention.

### Detailed description of preferred embodiments

Preferred embodiments of the grid according to the present invention will now be described with reference to the attached Figures.

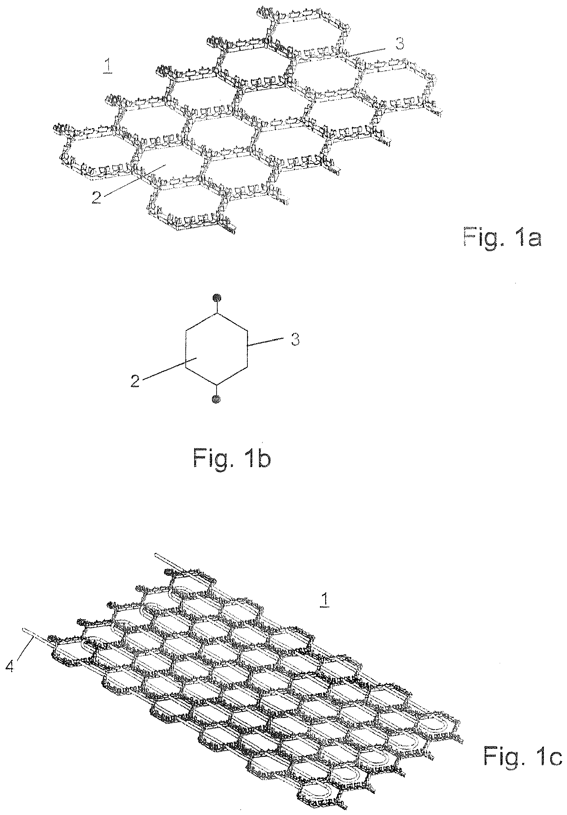

Figure la shows a schematic perspective view of a grid 1 according to a first preferred embodiment of the present invention. In this embodiment, the grid 1 is constituted by a plurality of hexagonal grid elements 2. The grid elements 2 each include struts 3. Figure 1b shows a single grid element 2.

Figure 1c shows a grid 1 which is formed by arranging three of the grids shown in Figure 1a in series. Figure 1c also already shows schematically how a pipe 4, e.g. a pipe belonging to a ceiling heating or cooling, would be fixed within pipe accommodation grooves formed in at least some of the struts 3 forming the grid elements 2 of the grid 1.

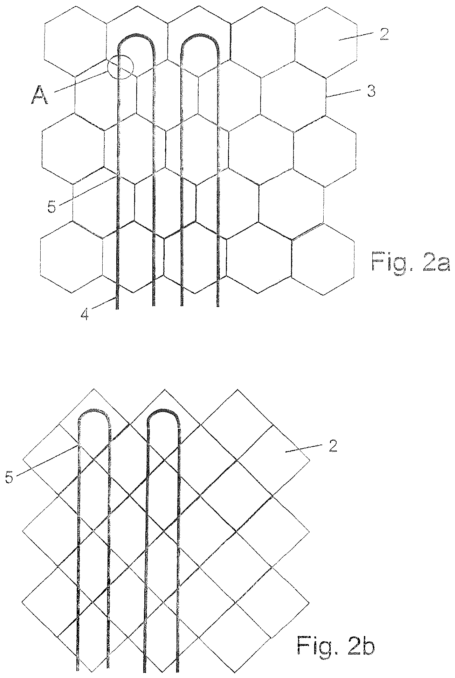

Also from Figure 2a, which shows a schematic top view of a part of the grid 1 of the first embodiment, it becomes clear how such pipe accommodating grooves 5 are positioned and oriented in the struts 3: each of the pipe accommodating grooves 5 only extends through a single strut 3, and each of the grooves 5 forms an angle which is different from 90° with the strut 3 in which it is formed. - In the embodiment of Figure 2a, the angle is about 60°.

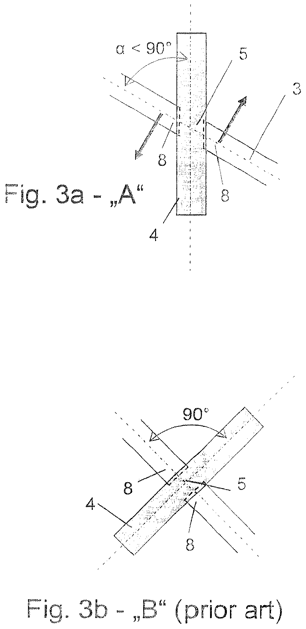

The arrangement of the pipe accommodating grooves 5 within the struts 3 according to the present invention provides a technical effect which can best be explained with reference to Figure 3a, which is a schematic, enlarged view of a detail "A" marked in Figure 2a. From Figure 3a, the position and orientation of a pipe accommodating groove 5 within a strut 3 of the grid 1 is apparent. In case the pipe 4 is pressed into the groove 5 (in a direction perpendicular to the drawing plane), the pressing forces are distributed so that the legs 8 at both sides of the groove 5 move apart from each other and give way so that the pipe 4 can easily fitted into the groove.

The arrows in Figure 3a indicate the direction in which the legs 8 are deflected. The legs 8 constitute securing members, and they define a gap for resiliently accommodating the pipe 4.

Thus, by arranging the pipe accommodating groove 5 at an angle different from 90° within the strut 3, the material on both sides of the groove 5 is suitably deflected when pressing the pipe 4 into the groove 5. In other words, the securing members are resiliently moved apart when the pipe is pressed into the gap formed between the two securing members or legs 8.

The placement of the pipe lengths within the pipe accommodating grooves 5 is greatly facilitated thereby. This is particularly apparent if the pipe 4 is made from a relatively rigid, non-compliant material, as it is generally the case with pipes used for ceiling heating and cooling.

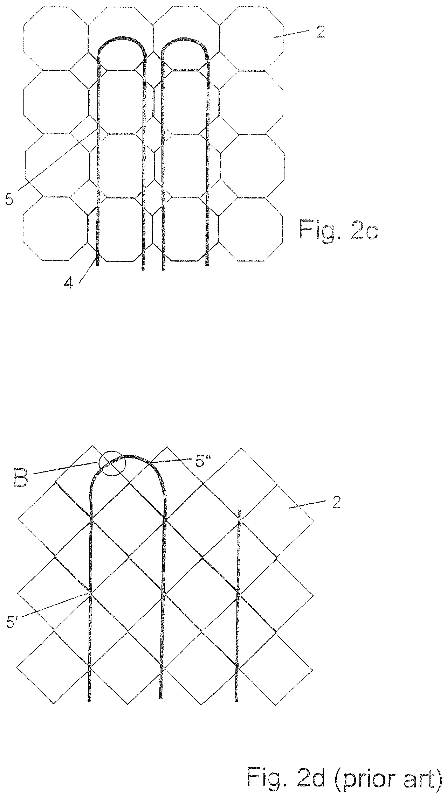

The present invention is not restricted to hexagonal grid elements. Figures 2b and 2c show that the aforementioned beneficial effect of the invention can also be achieved with, for example, rhombic grid elements 2 (Figure 2b) or octagonal grid elements 2 (Figure 2c). Further alternative arrangements and shapes of grid elements are possible within the frame of the invention, perhaps even including circular grid elements, as long as the pipe accommodating grooves 5 are formed in the struts 3 so as to form an angle which is different from 90°.

Figure 2d shows a prior art arrangement for comparison purposes. The prior art grid is comprised of rhombic grid elements similar as the one of Figure 2b. However, the pipe accommodating grooves are formed at positions which are different from the embodiment of the invention shown in Figure 2b: some of the grooves 5' are formed at crosspoints between two struts 3 rather than extending through single struts 3. Others 5" are formed alongside the struts 3, but are arranged so as to extend at right angles with the respective strut 3.

In contrast, in all the embodiments of the invention, each groove 5 only extends through a single strut 3 rather than in the area of a crosspoint between two struts, and at the same time, the grooves 5 form an angle with the respective strut 3 which is different from 90°.

Figure 3b, which is a schematic, enlarged view of a detail "B" marked in Figure 2b, demonstrates how a pipe length 4 would be pressed into such a groove 5" of the prior art grid shown in Figure 2d: the pressing force would only act in the direction perpendicular to the drawing plane, and there would be no force applied to the legs 8 of the groove 5" which would move them away from each other, so that a large force is necessary for pressing the pipe 4 into the groove 5".

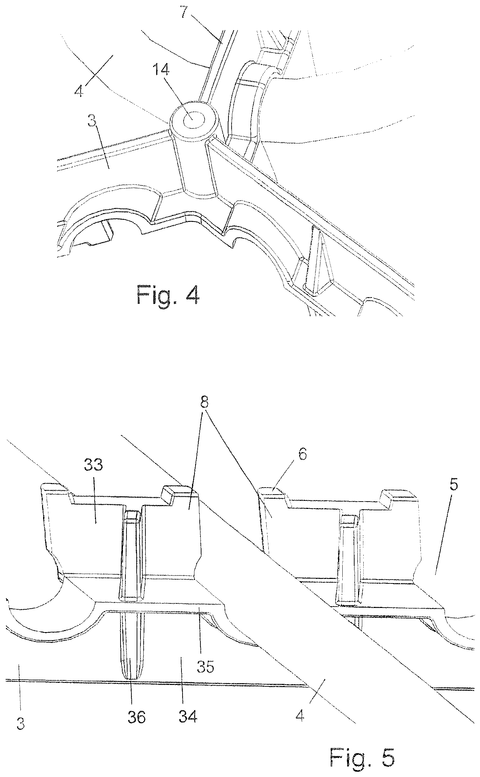

Figures 4 and 5 show more detailed views of how a pipe length 4 extends through a pipe accommodating groove 5 formed in a strut 3 of a grid 1 according to the present invention. The pipe accommodating groove 5 forms an angle different from 90° with the main direction of extension of the strut 3, so that also the pipe length 4 extends at the same angle respective to the strut 3 as soon as it has been pressed into the groove 5.

The Figures also demonstrate that in accordance with the present invention, each pipe accommodating groove 5 is formed in a single strut 3. At the corners of the grid elements 2 or the crosspoints of the struts 3, respectively, no pipe accommodating grooves 5 are formed. This may facilitate the manufacture of the grids 1 of the invention. Furthermore, as becomes clear from Figure 5, this also allows the corners of the grid elements 2 to be used for forming through holes 14 for accommodating nails by means of which the grid 1 can be nailed to the wooden casing.

Figure 4 also shows that the bottom sides of all the struts 3 are formed planar so as to constitute continuous support lines 7 for supporting the reinforcement mat. These support lines 7 form a planar structure so that the reinforcement mat (not shown) does not get caught by protruding elements when it is placed onto the grid 1.

In Figure 5, the grid and the pipe 4 fitted into the groove 5 have been turned upside down so that the narrow front faces of the struts 3, which come to rest on the wooden casing (not shown), are facing upwards. The Figure also shows the overall constitution of the strut 3 in this preferred embodiment of the grid element: the strut 3 is generally constituted from an upper wall part 33, a lower wall part 34, and a dividing stay 35 there between. Reinforcing bars 36 are also provided on the outside surfaces of the upper 33 and lower wall parts 34. The grooves 5 are formed so as to extend into the lower wall part 34 to some extent, and the dividing stay 35 follows the shape of the grooves 5.

Small nobs 6 are formed on the front faces of the upper wall parts 33 of the struts 3, which nobs 6 set a distance between the struts 3 and the casing if the grid 1 is brought into contact with the casing.

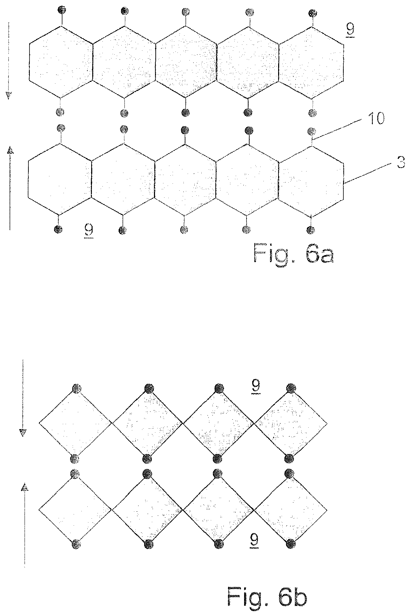

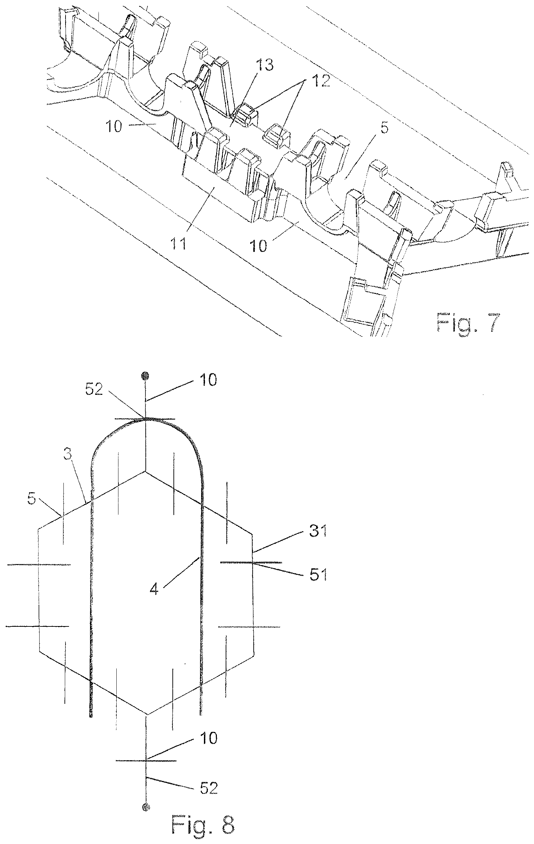

Finally, with reference to Figures 6a, 6b and 7, it will now be explained how a complete grid is formed by connecting a plurality of grid elements 2.

Figure 6a schematically shows two form parts 9 which are formed by e.g. injection moulding and each include five hexagonal grid elements 2 arranged in series. In addition to the struts 3 forming the actual hexagons, the form parts 9 also include connecting struts 10 which extend from two opposite corners of each hexagon. If these two form parts 9 are connected with each other by means of the connecting struts 10, four additional hexagonal shapes are formed in between the two form parts 9. By connecting several form parts 9 via their respective connecting struts 10, a complete grid is formed which is constituted by hexagons all having the same size.

In the case of form parts 9 each made up from several rhombic grid elements 2, the connection between two form parts 9 could be made as shown in Figure 6b.

By connecting a plurality of identical form parts 9 in this manner, the grid 1 can be custom tailored to a relatively large degree, while it can still be formed and placed in a cost effective manner.

Figure 7 shows an example of a snap joint which could be used for connecting two form parts 9 together: a snap retainer 11 comprising four resilient legs 12 is formed at the end of a connecting strut 10 of one grid element 2. At the end of a connecting strut 10 of an adjacent grid element 2, a matching snap bar 13 is formed. By connecting the snap bars 13 of the grid element 2 of a form part 9 with the snap retainers 11 of the grid elements 2 of an adjacent form part 9, the two form parts 9 can be connected together.

The connecting struts 10 could also include pipe accommodating grooves which may or may not form a right angle with the respective connecting strut 10. Some of the struts 3 of a grid element 2 could also be formed with pipe accommodating grooves 5 which extend at right angles, or with no pipe accommodating grooves at all. Figure 8 very schematically shows an embodiment in which four of the struts 3 of the hexagonal grid element 2 each include three pipe accommodating grooves 5 extending at angles different from 90°, whereas the remaining two struts 31 of the grid element (the struts extending parallel to the direction of extension of the pipe 4) each include two pipe accommodating grooves 51 extending at a right angle with the respective strut 31. The connecting struts 10 also include one groove 52 each which extends at a right angle with the respective connecting strut 10. As can be seen from the Figure, the grooves 51, 52 extending at right angles with the struts 31, 10 are suitably arranged so as to accommodate a pipe bend.

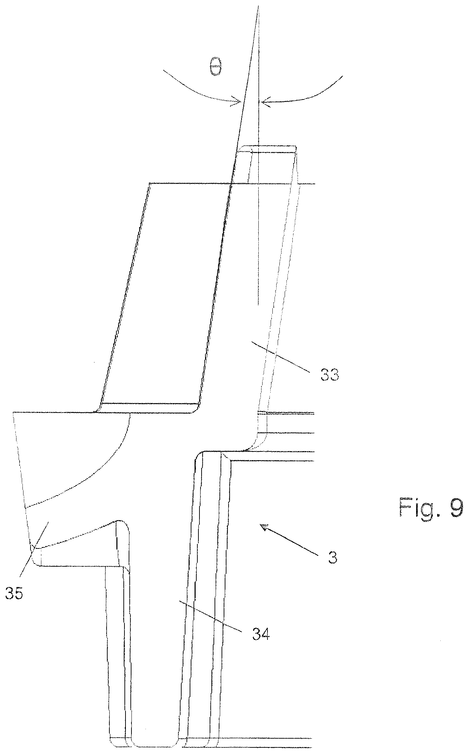

It will now be described with reference to Figure 9 that the struts 3 and the pipe accommodation grooves 5 formed therein are designed so that the grid elements 2 or form parts 9 can be moulded in a simple open / close mould without complex undercuts or collapsible cores.

Side faces of the struts 3 are tapered. This applies at least to the side faces of the upper wall parts 33 of the struts 3. The taper angle θ is about 7° with respect to a direction perpendicular to a base plane of the grid element 2. If this side surface were straight (0° taper), withdrawing the core would almost be impossible. By having the abutment surface taper over at least 5°, withdrawal of the core becomes easier. Of course, the surfaces of the strut and securing members that adjoin said parting surface not necessarily have to have the same taper angle. However, for overall simplicity and constant wall thickness it is beneficial if they do taper in the same way.

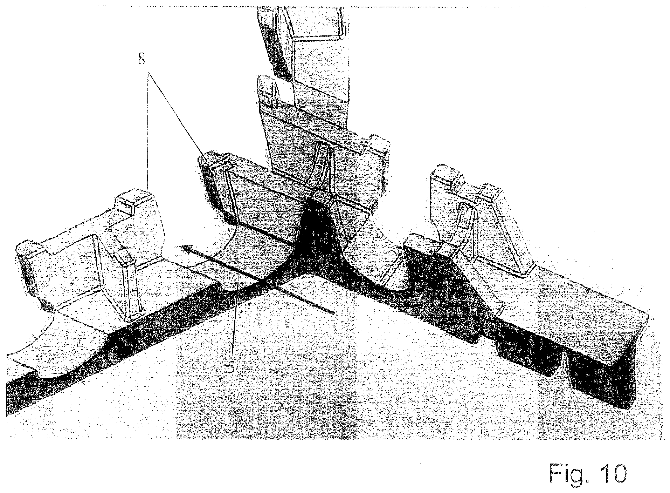

Another aspect that allows the mould to be of simple design is the location of the securing members with regard to the groove. As becomes clear from Figure 10, the securing members 8 are located spaced from the groove in the direction of extension of the pipe (indicated by an arrow). In case the securing members 8 were located somewhere halfway the groove 5, one would need an undercut or retractable core finger to make the grid element.

The grid 1 of the invention is used as follows when forming a reinforced-concrete ceiling: first of all, a plurality of form parts 9, each including several grid elements 2, are connected so as to form a complete grid. A pipe of a ceiling heating or cooling is then fitted, e.g. in a meandering shape, into the pipe accommodating grooves 5 of the grid. This is suitably done with the grid 1 being arranged as in Figure 5, i.e. with the openings to the grooves 5 and the nobs 6 facing upwards. (The result is as shown in Figure 1c.) The grid 1 is then turned upside down, into the orientation shown in Figure 4, so that the nobs 6 come to rest on the wooden casing and the support lines 7 for the reinforcement mat face upwards. The mat is then placed on the support lines 7, and the concrete is poured.

The small nobs 6 are the only parts of the grid 1 which are visible in the resultant ceiling. In order to make them even less conspicious, the nobs 6, or the entire grid 1, is made from a plastic material which has about the same colour as the concrete used.

In general, the grid 1 is made from a suitable plastic material as it is per se known in the art.

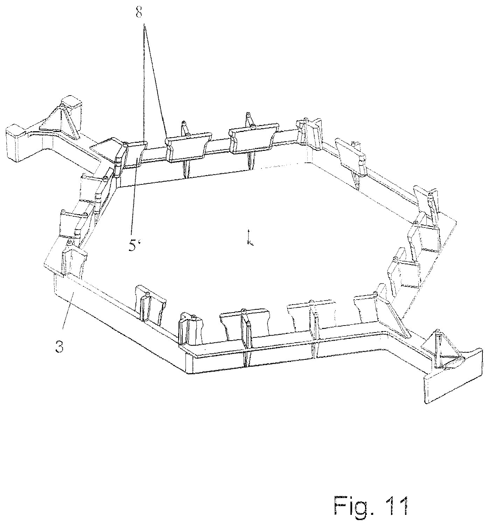

Finally, Figure 11 shows an alternative embodiment of the present invention. In this embodiment the positioning means are not constituted by a groove formed in a strut, such as the groove 5 in the remaining embodiments. In fact, in order to constitute the positioning means 5', the lower parts of the securing members 8 have sidewalls under an angle with respect to the strut.

Apart from the alternatives shown here, there are further possibilities for providing the positioning means. For example, one could imagine that four securing members are placed on one strut, and two securing members are placed off-set in respect to the remaining two, so as to constitute positioning means for positioning the pipe.

## Claims

1. A grid element (2) for securing a heating and/or cooling pipe (4) in a concrete building structure,
wherein the grid element (2) comprises means (5, 5') for positioning the pipe and at least two securing members (8) defining a gap for resiliently accommodating the pipe (4),
wherein the grid element (2) is so arranged and constructed that the securing members (8) are resiliently moved apart when the pipe (4) is pressed into the gap,
**characterized in that**
the grid element has several struts (3) which intersect or cross each other, and wherein the securing members (8) and/or the positioning means (5) extend in or through the struts (3) while being spaced from intersection or cross points between the individual struts (3).

2. The grid element (2) of claim 1, wherein the positioning means are provided in the form of at least one groove (5) formed in at least one of the struts (3).

3. The grid element (2) of claim 2, wherein the securing members are provided in the form of legs (8) on both sides of the groove (5).

4. The grid element (2) of any one of claims 1 to 3, wherein a main direction of extension of the pipe positioning means (5) includes an angle (α) with the main direction of extension of the strut (3) in which it is formed, which angle (α) is different from 90°.

5. The grid element (2) of any one of the preceding claims, wherein the securing members (8) and/or the positioning means (5) are so arranged and constructed that, if the pipe (4) is secured to the grid element (2), the main direction of extension of the pipe (4) includes an angle (α) with the strut (3) in which the securing members (8) and/or the positioning means (5) are formed which is different from 90°.

6. The grid element (2) of claim 4 or 5, wherein the angle (α) is between 25 and 65°, preferably around 45 or 60°.

7. The grid element (2) according to claim 1, wherein the grid element (2) has a polygonal shape, preferably a hexagonal shape.

8. The grid element (2) according to any one of the preceding claims, further comprising at least one through hole (14) for accommodating a screw, a nail or the like, wherein the through hole (14) is preferably arranged at a corner of the polygonal grid element (2).

9. The grid element (2) of any one of the preceding claims, wherein the securing members (8) are arranged to engage, during use, the pipe (4) at opposite sides, at locations that are spaced apart in the longitudinal direction of the pipe (4).

10. The grid element (2) of any one of the preceding claims 1 to 9, wherein the securing members (8) are located adjacent to the positioning means (5, 5').

11. The grid element (2) of any one of the preceding claims, wherein the struts (3) have side faces tapered at a taper angle (θ) of at least 5° and preferably around 7° with respect to a direction perpendicular to a base plane of the grid element (2).

12. The grid element (2) of any one of the preceding claims, wherein upper surfaces of the struts (3), which are arranged so as to provide support for a reinforcement mat, together form a planar bearing surface (7).

13. The grid element (2) of any one of the preceding claims, wherein bottom surfaces of the struts (3) are formed with protruding nobs (6), which nobs (6) are configured and arranged so as to set a distance between the struts (3) and a casing if the grid element (2) is brought into contact with the casing.

14. The grid element (2) according to any one of the preceding claims, further comprising at least one connecting strut (10) for attachment to an adjacent grid element (2), wherein the connecting strut (10) preferably also includes pipe positioning means (52) and securing members.

15. A moulded form part (9) comprising a series of the grid elements (2) of any one of the preceding claims.

16. A grid (1) assembled from grid elements (2) according to any one of claims 1 to 14 or from form parts (9) as recited in claim 15, wherein the grid (1) is preferably constituted as a spacer for maintaining a predetermined distance between a reinforcement mat and a casing in a reinforced-concrete building structure such as a ceiling or a floor.

17. The grid (1) according to claim 16, wherein the grid elements (2) or the form parts (9), respectively, are attached to each other by means of connecting struts (10), and the connecting struts (10) of adjacent grid elements (2) are arranged and constructed so as to form further grid elements (2).

18. The grid (1) according to claim 16 or 17, further including a pipe (4) mounted there to.

19. A method of mounting a heating and/or cooling pipe (4) to a concrete building structure, comprising the following steps:
providing a grid element (2) comprising means (5, 5') for positioning the pipe and at least two securing members (8) defining a gap for resiliently accommodating the pipe (4), and
pressing the pipe (4) into the gap,
wherein the securing members (8) are resiliently moved apart when the pipe (4) is pressed into the gap,
**characterized in that**
the grid element has several struts (3) which intersect or cross each other, and wherein the securing members (8) and/or the positioning means (5) extend in or through the struts (3) while being spaced from intersection or cross points between the individual struts (3).

20. The method of claim 19, further comprising providing a moulded form part (9) comprising a series of the grid elements (2).

21. The method of claim 19 or 20, further comprising providing a grid (1) assembled from grid elements (2) or form parts (9), respectively, and preferably using the grid (1) as a spacer for maintaining a predetermined distance between a reinforcement mat and a casing in the reinforced-concrete building structure.

## Patentansprüche

1. Gitterelement (2) zum Sichern eines Heiz- und/oder Kühlrohrs (4) in einer Gebäudestruktur aus Beton,
wobei das Gitterelement (2) Mittel (5, 5') zum Positionieren des Rohrs und mindestens zwei Sicherungselemente (8) umfasst, die einen Spalt zum nachgiebigen Aufnehmen des Rohrs (4) definieren,
wobei das Gitterelement (2) derart angeordnet und konstruiert ist, dass die Sicherungselemente (8) nachgiebig voneinander wegbewegt werden, wenn das Rohr (4) in den Spalt gepresst wird,
**dadurch gekennzeichnet, dass**
das Gitterelement mehrere Streben (3) aufweist, die sich schneiden oder kreuzen, und wobei sich die Sicherungselemente (8) und/oder Positioniermittel (5) in oder durch die Streben (3) erstrecken und gleichzeitig von Schnitt- oder Kreuzungspunkten zwischen den einzelnen Streben (3) beabstandet sind.

2. Gitterelement (2) nach Anspruch 1, wobei die Positioniermittel in Form von mindestens einer Nut (5) bereitgestellt sind, die in mindestens einer der Streben (3) ausgebildet ist.

3. Gitterelement (2) nach Anspruch 2, wobei die Sicherungselemente in Form von Beinen (8) auf beiden Seiten der Nut (5) breitgestellt sind.

4. Gitterelement (2) nach einem der Ansprüche 1 bis 3, wobei eine Hauptausdehnungsrichtung des Rohrpositioniermittels (5) einen Winkel (α) mit der Hauptausdehnungsrichtung der Strebe (3) aufweist, in der es gebildet ist, wobei der Winkel (α) ein anderer als 90° ist.

5. Gitterelement (2) nach einem der vorhergehenden Ansprüche, wobei die Sicherungselemente (8) und/oder die Positioniermittel (5) derart angeordnet und konstruiert sind, dass, falls das Rohr (4) an dem Gitterelement (2) gesichert ist, die Hauptausdehnungsrichtung des Rohrs (4) einen Winkel (α) mit der Strebe (3) aufweist, in dem die Sicherungselemente (8) und/oder Positioniermittel (5) gebildet sind und der ein anderer als 90° ist.

6. Gitterelement (2) nach Anspruch 4 oder 5, wobei der Winkel (α) zwischen 25 und 65°, vorzugsweise um 45 oder 60° liegt.

7. Gitterelement (2) nach Anspruch 1, wobei das Gitterelement (2) eine polygonale Form, vorzugsweise eine hexagonale Form aufweist.

8. Gitterelement (2) nach einem der vorhergehenden Ansprüche, ferner umfassend mindestens ein Durchgangsloch (14) zum Aufnehmen einer Schraube, eines Nagels oder dergleichen, wobei das Durchgangsloch (14) vorzugsweise an einer Ecke des polygonalen Gitterelements (2) angeordnet ist.

9. Gitterelement (2) nach einem der vorhergehenden Ansprüche, wobei die Sicherungselemente (8) zum Einrasten des Rohrs (4) während des Gebrauchs auf gegenüberliegenden Seiten an Positionen angeordnet sind, die in der Längsrichtung des Rohrs (4) beabstandet sind.

10. Gitterelement (2) nach einem der vorhergehenden Ansprüche 1 bis 9, wobei die Sicherungselemente (8) benachbart zu den Positioniermitteln (5, 5') angeordnet sind.

11. Gitterelement (2) nach einem der vorhergehenden Ansprüche, wobei die Streben (3) Seitenflächen aufweisen, die mit einem Verjüngungswinkel (θ) von mindestens 5° und vorzugsweise rund 7° in Bezug auf eine Richtung, die senkrecht zu einer Basisebene des Gitterelements (2) ist, verjüngt sind.

12. Gitterelement (2) nach einem der vorhergehenden Ansprüche, wobei obere Oberflächen der Streben (3), die zum Bereitstellen einer Auflage für eine Verstärkungsmatte angeordnet sind, zusammen eine planare Lageroberfläche (7) bilden.

13. Gitterelement (2) nach einem der vorhergehenden Ansprüche, wobei untere Oberflächen der Streben (3) mit hervorstehenden Vorsprüngen (6) gebildet sind, wobei die Vorsprünge (6) konfiguriert und angeordnet sind, um einen Abstand zwischen den Streben (3) und einer Ummantelung einzustellen, falls das Gitterelement (2) mit der Ummantelung in Kontakt gebracht wird.

14. Gitterelement (2) nach einem der vorhergehenden Ansprüche, ferner umfassend mindestens eine Verbindungsstrebe (10) zur Befestigung an einem benachbarten Gitterelement (2), wobei die Verbindungsstrebe (10) vorzugsweise auch Rohrpositioniermittel (52) und Sicherungselemente aufweist.

15. Formteil (9), umfassend eine Reihe von Gitterelementen (2) nach einem der vorhergehenden Ansprüche.

16. Gitter (1), das aus Gitterelementen (2) nach einem der Ansprüche 1 bis 14 oder aus Formteilen (9) wie in Anspruch 15 beschrieben, zusammengebaut ist, wobei das Gitter (1) vorzugsweise als ein Abstandshalter gebildet ist, um einen vorbestimmten Abstand zwischen einer Verstärkungsmatte und einer Ummantelung in einer Gebäudestruktur aus verstärktem Beton wie einer Decke oder einem Fußboden aufrechtzuerhalten.

17. Gitter (1) nach Anspruch 16, wobei die Gitterelemente (2) oder die Formteile (9) jeweils mittels Verbindungsstreben (10) aneinander befestigt sind und die Verbindungsstreben (10) von benachbarten Gitterelementen (2) derart angeordnet und konstruiert sind, dass sie weitere Gitterelemente (2) bilden.

18. Gitter (1) nach Anspruch 16 oder 17, ferner aufweisend ein Rohr (4), das daran montiert ist.

19. Verfahren zur Montage eines Heiz- und/oder Kühlrohrs (4) an einer Gebäudestruktur aus Beton, umfassend die folgenden Schritte:
Bereitstellen eines Gitterelements (2), das Mittel (5, 5') zum Positionieren des Rohrs und mindestens zwei Sicherungselemente (8) umfasst, die einen Spalt zum nachgiebigen Aufnehmen des Rohrs (4) definieren, und
Pressen des Rohrs (4) in den Spalt,
wobei die Sicherungselemente (8) nachgiebig voneinander wegbewegt werden, wenn das Rohr (4) in den Spalt gepresst wird,
**dadurch gekennzeichnet, dass**
das Gitterelemente mehrere Streben (3) aufweist, die sich schneiden oder kreuzen, und wobei sich die Sicherungselemente (8) und/oder Positioniermittel (5) in oder durch die Streben (3) erstrecken und gleichzeitig von Schnitt- oder Kreuzungspunkten zwischen den einzelnen Streben (3) beabstandet sind.

20. Verfahren nach Anspruch 19, ferner umfassend das Bereitstellen eines Formteils (9), das eine Reihe der Gitterelemente (2) umfasst.

21. Verfahren nach Anspruch 19 oder 20, ferner umfassend das Bereitstellen eines Gitters (1), das jeweils aus Gitterelementen (2) bzw. Formteilen (9) zusammengebaut ist, wobei das Gitter (1) vorzugsweise als ein Abstandshalter verwendet wird, um einen vorbestimmten Abstand zwischen einer Verstärkungsmatte und einer Ummantelung in der Gebäudestruktur aus Stahlbeton aufrechtzuerhalten.

## Revendications

1. Élément de grille (2) pour fixer un tuyau de chauffage et/ou de refroidissement (4) dans une structure de bâtiment en béton,
dans lequel l'élément de grille (2) comprend des moyens (5, 5') de positionnement du tuyau et au moins deux organes de fixation (8) définissant un espace pour le logement résilient du tuyau (4),
dans lequel l'élément de grille (2) est agencé et construit de façon à ce que les organes de fixation (8) sont écartés de manière résiliente lorsque le tuyau (4) est pressé dans l'espace,
**caractérisé en ce que**
l'élément de grille a plusieurs entretoises (3) qui se coupent ou se croisent, et dans lequel les organes de fixation (8) et/ou les moyens de positionnement (5) s'étendent dans ou à travers les entretoises (3) tout en étant espacés des points d'intersection ou de croisement entre les entretoises individuelles (3).

2. Élément de grille (2) selon la revendication 1, dans lequel les moyens de positionnement sont fournis sous la forme d'au moins une rainure (5) formée dans au moins une des entretoises (3).

3. Élément de grille (2) selon la revendication 2, dans lequel les organes de fixation sont fournis sous la forme de jambes (8) des deux côtés de la rainure (5).

4. Élément de grille (2) selon l'une quelconque des revendications 1 à 3, dans lequel une direction principale d'extension des moyens de positionnement de tuyau (5) inclut un angle (α) avec la direction principale d'extension de l'entretoise (3) dans laquelle elle est formée, lequel angle (α) est différent de 90°.

5. Élément de grille (2) selon l'une quelconque des revendications précédentes, dans lequel les organes de fixation (8) et/ou les moyens de positionnement (5) sont agencés et construits de façon à ce que, si le tuyau (4) est fixé à l'élément de grille (2), la direction principale d'extension du tuyau (4) inclut un angle (α) avec l'entretoise (3) dans lequel les organes de fixation (8) et/ou les moyens de positionnement (5) sont formés qui est différent de 90°.

6. Élément de grille (2) selon la revendication 4 ou 5, dans lequel l'angle (α) est entre 25 et 65°, de préférence d'environ 45 ou 60°.

7. Élément de grille (2) selon la revendication 1, dans lequel l'élément de grille (2) a une forme polygonale, de préférence une forme hexagonale.

8. Élément de grille (2) selon l'une quelconque des revendications précédentes, comprenant en outre au moins un trou traversant (14) pour loger une vis, un clou ou similaire, dans lequel le trou traversant (14) est agencé de préférence au niveau d'un coin de l'élément de grille polygonal (2).

9. Élément de grille (2) selon l'une quelconque des revendications précédentes, dans lequel les organes de fixation (8) sont agencés pour mettre en prise, pendant l'utilisation, le tuyau (4) au niveau de côtés opposés, à des emplacements qui sont espacés dans la direction longitudinale du tuyau (4).

10. Élément de grille (2) selon l'une quelconque des revendications 1 à 9 précédentes, dans lequel les organes de fixation (8) sont situés de manière adjacente aux moyens de positionnement (5, 5').

11. Élément de grille (2) selon l'une quelconque des revendications précédentes, dans lequel les entretoises (3) ont des faces latérales coniques à un angle conique (θ) d'au moins 5° et de préférence d'environ 7° par rapport à une direction perpendiculaire à un plan de base de l'élément de grille (2).

12. Élément de grille (2) selon l'une quelconque des revendications précédentes, dans lequel des surfaces supérieures des entretoises (3), qui sont agencées de façon à fournir un support à un treillis de renfort, forment ensemble une surface d'appui plane (7).

13. Élément de grille (2) selon l'une quelconque des revendications précédentes, dans lequel des surfaces inférieures des entretoises (3) sont formées de protubérances en saillie (6), lesquelles protubérances (6) sont configurées et agencées de façon à régler une distance entre les entretoises (3) et un boîtier si l'élément de grille (2) est amené en contact avec le boîtier.

14. Élément de grille (2) selon l'une quelconque des revendications précédentes, comprenant en outre au moins une entretoise de liaison (10) pour la fixation à un élément de grille adjacent (2), dans lequel l'entretoise de liaison (10) inclut également de préférence des moyens de positionnement de tuyau (52) et des organes de fixation.

15. Pièce formée par moulage (9) comprenant une série des éléments de grille (2) selon l'une quelconque des revendications précédentes.

16. Grille (1) assemblée à partir d'éléments de grille (2) selon l'une quelconque des revendications 1 à 14 ou à partir de pièces formées (9) selon la revendication 15, dans laquelle la grille (1) est constituée de préférence comme un écarteur pour maintenir une distance prédéterminée entre un treillis de renfort et un boîtier dans une structure de bâtiment en béton renforcé tel qu'un plafond ou un plancher.

17. Grille (1) selon la revendication 16, dans laquelle les éléments de grille (2) ou les pièces formées (9), respectivement, sont fixés les uns aux autres au moyen d'entretoises de liaison (10), et les entretoises de liaison (10) d'éléments de grille (2) adjacents sont agencées et construites de façon à former d'autres éléments de grille (2).

18. Grille (1) selon la revendication 16 ou 17, incluant en outre un tuyau (4) monté sur celle-ci.

19. Procédé de montage d'un tuyau de chauffage et/ou de refroidissement (4) sur une structure de bâtiment en béton, comprenant les étapes suivantes :
fourniture d'un élément de grille (2) comprenant des moyens (5, 5') de positionnement du tuyau et au moins deux organes de fixation (8) définissant un espace pour le logement résilient du tuyau (4), et
pressage du tuyau (4) dans l'espace,
dans lequel les organes de fixation (8) sont écartés de manière résiliente lorsque le tuyau (4) est pressé dans l'espace,
**caractérisé en ce que**
l'élément de grille a plusieurs entretoises (3) qui se coupent ou se croisent, et dans lequel les organes de fixation (8) et/ou les moyens de positionnement (5) s'étendent dans ou à travers les entretoises (3) tout en étant espacés de points d'intersection ou de croisement entre les entretoises individuelles (3).

20. Procédé selon la revendication 19, comprenant en outre la fourniture d'une pièce formée par moulage (9) comprenant une série d'éléments de grille (2).

21. Procédé selon la revendication 19 ou 20, comprenant en outre la fourniture d'une grille (1) assemblée à partir d'éléments de grille (2) ou de pièces formées (9), respectivement, et en utilisant de préférence la grille (1) comme un écarteur pour maintenir une distance prédéterminée entre un treillis de renfort et un boîtier dans la structure de bâtiment en béton renforcé.
